# DEMANDE DE BREVET EUROPEEN

(11) **EP 0 855 236 A2**
(43) Date de publication de la demande: **29.07.1998**
(21) Numéro de dépôt: 98201090.2
(22) Date de dépôt: 12.06.1995
(51) Int. Cl.: B21J 15/32, B23P 19/00, B65G 51/02

(54) **Dispositif de stockage de pièces en vue de leur distribution à l'unité**

(30) Priorité: 13.06.1994 FR 9407288
(62) Demande divisionnaire de: 95923368.5
(71) Demandeur: STE ATELIERS DE LA HAUTE-GARONNE - ETS AURIOL ET CIE, F-31130 Balma (FR); Auriol, Jean-Marc, F-31130 Balma (FR); Bornes, Philippe, F-31130 Balma (FR); DASSAULT AVIATION, F-92420 Vaucresson (FR)
(72) Inventeur: Auriol, Jean-Marc, 31130 Balma (FR); Bornes, Philippe, 31130 Balma (FR); Guerin, Sylvain, 59113 Seclin (FR)
(74) Mandataire: Cabinet BARRE LAFORGUE & associés

(57) **Abrégé**

La présente invention concerne un dispositif de stockage de pièces muni d'un moyen de retenue (24) adapté pour délivrer une par une les pièces vers le moyen élastique (11). L'invention est plus particulièrement destinée à assurer une alimentation homogène et régulière des machines à riveter utilisées dans le domaine aéronautique.

## Description

La présente invention concerne un dispositif de stockage de pièces en vue de leur distribution à l'unité.

Plus particulièrement, les pièces en question sont des rivets destinés à alimenter de manière continue et homogène une machine à riveter.

Il est bien connu que pour assurer un rivetage homogène, ce qui est impératif (notamment dans le domaine de l'aéronautique), il est nécessaire d'alimenter une machine à riveter de la manière la plus uniforme possible. Chaque rivet doit arriver au poste de rivetage dans le bon sens, et un par un. Or, une machine à riveter peut être alimentée par plusieurs types de rivets différents, en longueurs, diamètres et formes de tête. Il convient donc de constituer des dispositifs de stockage distincts contenant chacun un type de rivet déterminé. Ensuite, il convient de mettre en oeuvre un dispositif de sélection d'un type de rivet déterminé, et un moyen de distribution de ce rivet à l'unité, vers une machine à riveter.

A ce jour, cependant, il n'existe pas de dispositif de distribution de rivets à l'unité capable de délivrer, toujours dans une même position, des rivets de tailles et formes différentes, en les guidant correctement tout au long de leur trajet.

Le but de la présente invention est de pallier l'ensemble de ces inconvénients et notamment de créer un dispositif de stockage de pièces permettant de délivrer et distribuer, toujours dans une même position, des pièces de tailles et de formes différentes. Un tel dispositif doit être simple, peu onéreux, facile à mettre en oeuvre et à fabriquer.

Le dispositif de stockage conforme à la présente invention se caractérise en ce qu'il comporte :
- un élément tubulaire, un raccord et un élément de retenue présentant chacun un alésage interne adapté pour loger et guider une pluralité de pièces placées les unes derrière les autres,
- une source de pression, adaptée pour exercer une pression à l'intérieur de l'alésage central, sur une première pièce de ladite pluralité et,
- des moyens de retenue ménagés dans l'élément de retenue, adaptés pour retenir la première pièce et la suivante, pour libérer la première pièce sur commande et pour mettre en attente la pièce suivante en la faisant passer en première position, et ainsi, délivrer à l'unité chaque pièce de la pluralité.

Un tel dispositif de stockage est notamment pourvu de moyens de retenue adaptés pour délivrer la première pièce stockée et retenir toutes les autres. Dès que la première pièce est délivrée, la seconde vient prendre sa place, afin d'être prête pour une prochaine délivrance.

Avantageusement, les moyens de retenue sont constitués par deux vérins fonctionnant en opposition et agissant respectivement pour retenir la première et la seconde pièce stockée. Ainsi, lorsque la première pièce stockée est retenue, la seconde ne l'est pas et vice-versa.

Avantageusement, ces deux vérins sont disposés orthogonalement l'un par rapport à l'autre.

D'autres objets, buts et caractéristiques de la présente invention ressortiront mieux de la description qui suit, à titre d'information, en regard des dessins annexés dans lesquels :
- la figure 1 est une vue schématique en coupe longitudinale d'un moyen élastique selon l'invention,
- la figure 2 est une vue schématique en coupe longitudinale du moyen élastique de la figure 1 placé à l'intérieur d'un élément tubulaire,
- la figure 3 est une vue semblable à la figure 2 montrant le déplacement d'une pièce à l'intérieur du moyen élastique,
- la figure 4 est une vue schématique en coupe longitudinale présentant un moyen de stockage associé au moyen élastique de la figure 2,
- les figures 5 à 7 sont des vues schématiques en coupe longitudinale du moyen de stockage montrant le fonctionnement du moyen de retenue,
- la figure 8 est une vue en perspective, avec arrachement partiel, montrant un dispositif de distribution de pièces selon l'invention comportant un moyen élastique, un moyen de sélection et une pluralité de moyens de stockage et,
- la figure 9 est une vue schématique en coupe transversale du moyen de sélection représenté à la figure 8.

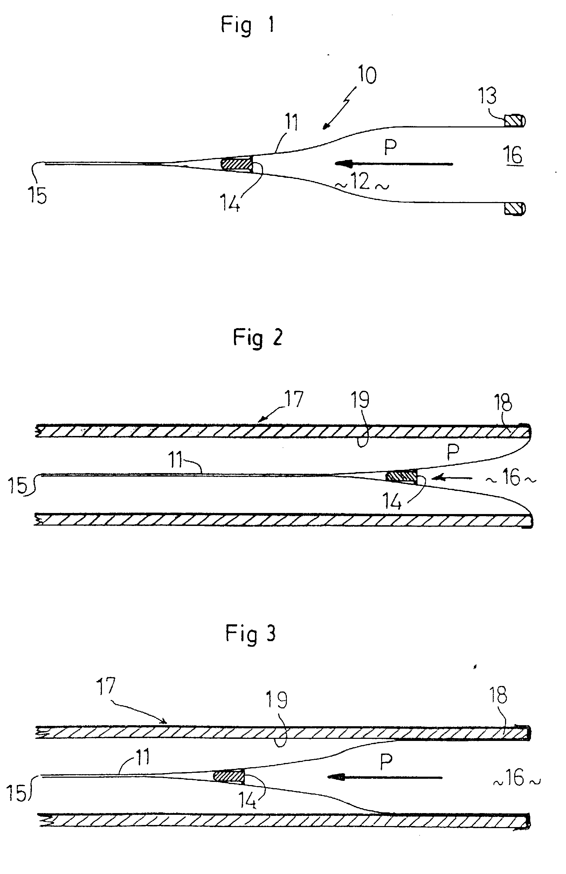

Selon le mode de réalisation représenté à la figure 1, le dispositif de distribution 10 selon l'invention comporte :
- un moyen élastique déformable 11, se présentant sous la forme d'une gaine plate extensible, et
- une source de pression (non représentée), ici de l'air comprimé, dont l'action (flèche P) s'exerce à l'intérieur du moyen élastique 11 et provoque un gonflement de l'alésage central 12 de celui-ci.

La gaine élastique 11 est repliée et fixée sur un anneau 13 solidaire d'un bâti (non représenté).

Une pièce 14, ici un rivet, se déplace à l'intérieur de la gaine 11 d'un orifice d'introduction 16 vers un orifice de sortie 15 (flèche P) sous l'action de l'air comprimé.

On remarquera que, sous l'action de la pression exercée, la gaine 11 s'expanse radialement et permet ainsi au rivet 14, également soumis à la source de pression (s'exerçant sur sa tête), d'avancer dans la gaine. Le rivet 14 forme ainsi, en quelque sorte, un bouchon refermant la gaine et empêchant l'air sous pression de s'échapper directement vers l'orifice de sortie 15 de cette gaine.

De ce fait, le rivet 14 est poussé progressivement et uniformément vers l'orifice de sortie 15. On conçoit facilement que grâce à l'expansion radiale de la gaine, celle-ci peut recevoir des rivets de tailles et formes différentes. En outre, comme la gaine enserre le rivet et ne s'expanse qu'à partir de la tête de celui-ci, les rivets sont guidés et maintenus tout au long de leur trajet à l'intérieur de la gaine.

En variante, pour éviter que la gaine éclate ou qu'elle se déforme de manière irréversible, on la place à l'intérieur d'un élément tubulaire 17 (figures 2 et 3) présentant un alésage longitudinal 19. Cet élément tubulaire présente une certaine rigidité radiale et une souplesse longitudinale.

Dans ce cas, l'orifice d'introduction 16 de la gaine est retourné et fixé (par collage par exemple) sur l'extrémité 18 de l'élément tubulaire lui-même. Le principe d'avancement du rivet 14 à l'intérieur de la gaine élastique 11 reste le même. Cependant, comme on le remarquera mieux à la figure 3, l'expansion radiale de la gaine 11 est limitée par la présence de l'élément tubulaire 17.

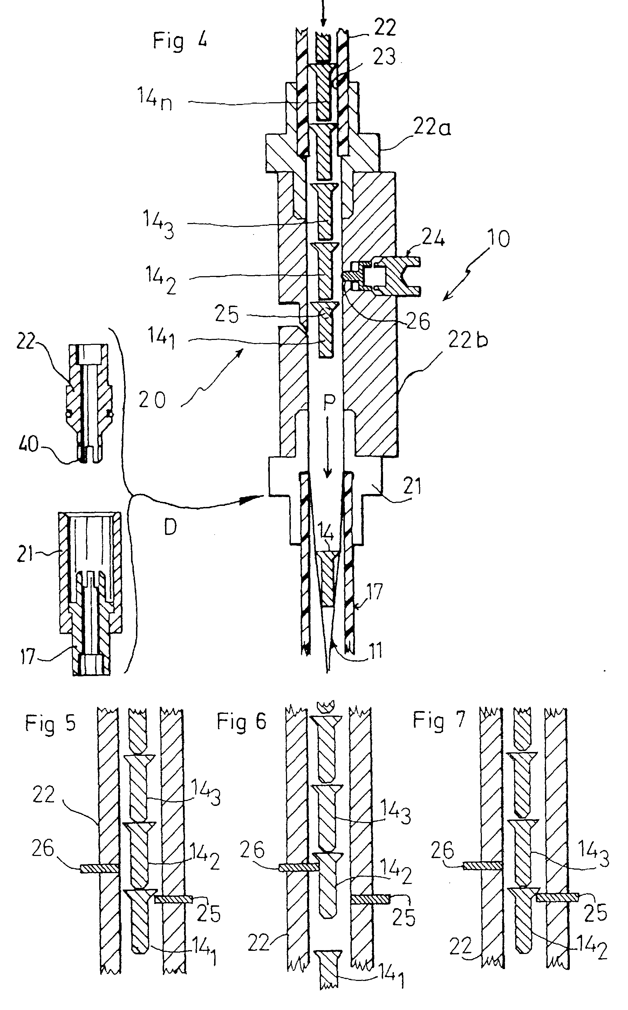

Comme le montre la figure 4, un tel dispositif de distribution peut comporter, en outre, un dispositif de stockage 20. Ce dispositif de stockage est relié au moyen élastique par un moyen de liaison 21 de type connu.

Le dispositif de stockage comporte un élément tubulaire creux 22 présentant un alésage central 23, raccordé à un élément de retenue 22b par un raccord classique 22a. L'ensemble de ces éléments 22, 22a et 22b présente un même alésage central 23.

A l'intérieur de cet alésage central 23, sont empilés les uns derrière les autres des rivets 14₁ à 14ₙ (n étant un entier positif supérieur à 1).

Un moyen de retenue 24 constitué par deux pistons 25 et 26 montés orthogonalement l'un par rapport à l'autre est placé dans l'élément de retenue 22b. Ces pistons sont adaptés pour s'étendre de façon alternative à l'intérieur de l'alésage central 23. En pleine extension figures 5 a 7), les pistons contactent la tige d'un des rivets 14₁ ou 14₂, le bloquant ainsi par rapport à l'élément 22b.

L'actionnement des pistons 25, 26 est commandé par une vanne 5/2. Ainsi (figure 5), le piston 25 (le plus en aval dans l'élément 22b) retient la pièce 14₁ au niveau de sa tête et la bloque en position. Toutes les autres pièces 14₂ à 14ₙ sont de ce fait également maintenues en position bien que le piston 26 (le plus en amont dans l'élément 22b) soit rétracté.

Une certaine pression règne à l'intérieur de l'alésage central 23. Cette pression est adaptée pour s'exercer sur la première pièce 14₁ de telle sorte que cette pièce aurait tendance à sortir de l'élément 22b si elle n'était pas retenue par le vérin 25.

Lors de l'envoi de la pièce 14₁ vers le moyen élastique, le vérin aval 25 se rétracte et libère la pièce 14₁ tandis que le vérin amont 26 se déploie et entre en contact avec la tige du rivet 14₂. Le rivet 14₂, et les suivants, sont ainsi maintenus en position (figure 6). Dès que le rivet 14₁ est sorti de l'élément 22b (figure 7), on actionne de nouveau la paire de vérins pour déployer le vérin aval 25 et rétracter le vérin amont 26. On se retrouve alors dans la même position qu'à la figure 5, mais avec le rivet 14₂ bloqué en première position.

Grâce à un tel mécanisme de retenue, il est ainsi possible de commander le départ, un par un, des rivets stockés dans le dispositif de stockage 20.

On notera que les vérins 25 et 26 reculent dans l'élément de retenue 22b sous l'action d'air comprimé et avancent dans l'alésage 23 grâce à deux ressorts (non détaillés). De ce fait, s'il y a un quelconque blocage au niveau du circuit d'air comprimé, les ressorts bloquent les vérins en position avancée (à l'intérieur de l'alésage), ce qui bloque l'ensemble des pièces 14 et évite de détériorer la machine à riveter. Ceci constitue une sécurité accrue lors de l'emploi de ce dispositif de stockage.

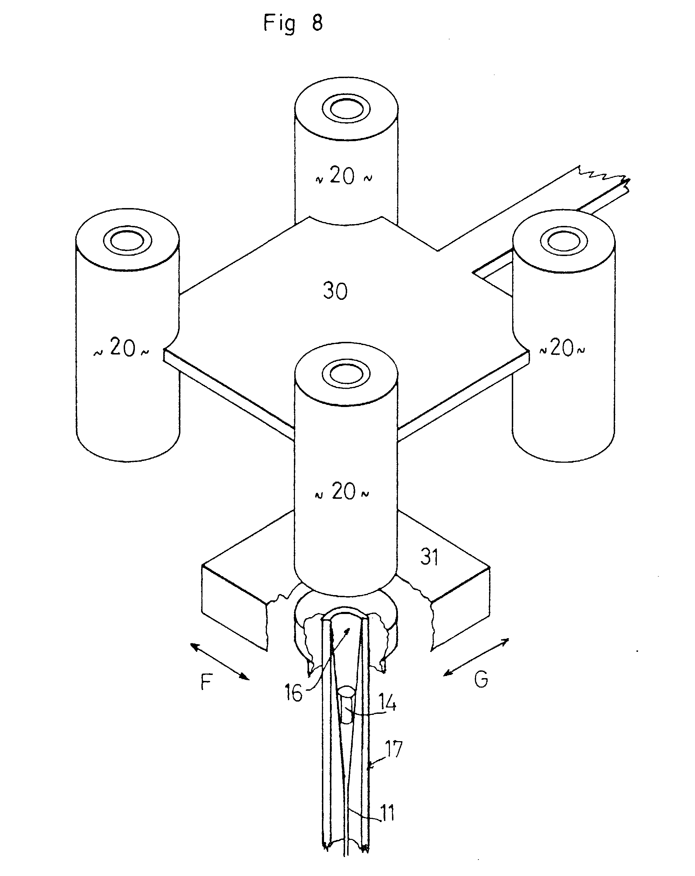

Lorsque plusieurs dispositifs de stockage 20 sont associés (figure 8), par exemple par un bâti 30, le dispositif de distribution selon l'invention comporte :
- la pluralité de dispositifs de stockage 20,
- un moyen de sélection 31 et,
- le moyen élastique 11 dans son élément tubulaire 17.

Le moyen de sélection 31 est un simple plateau déplaçable selon deux directions orthogonales (flèches F et G), afin de permettre la mise en coïncidence de l'ouverture 16 du moyen élastique 11 porté par le moyen de sélection 31, avec l'orifice de sortie (non visible à la figure 8) de l'un quelconque des dispositifs de stockage 20.

Dans l'exemple représenté, le moyen de sélection 31 est associé à quatre dispositifs de stockage, mais de manière évidente le nombre de dispositifs de stockage peut être plus important ou moindre.

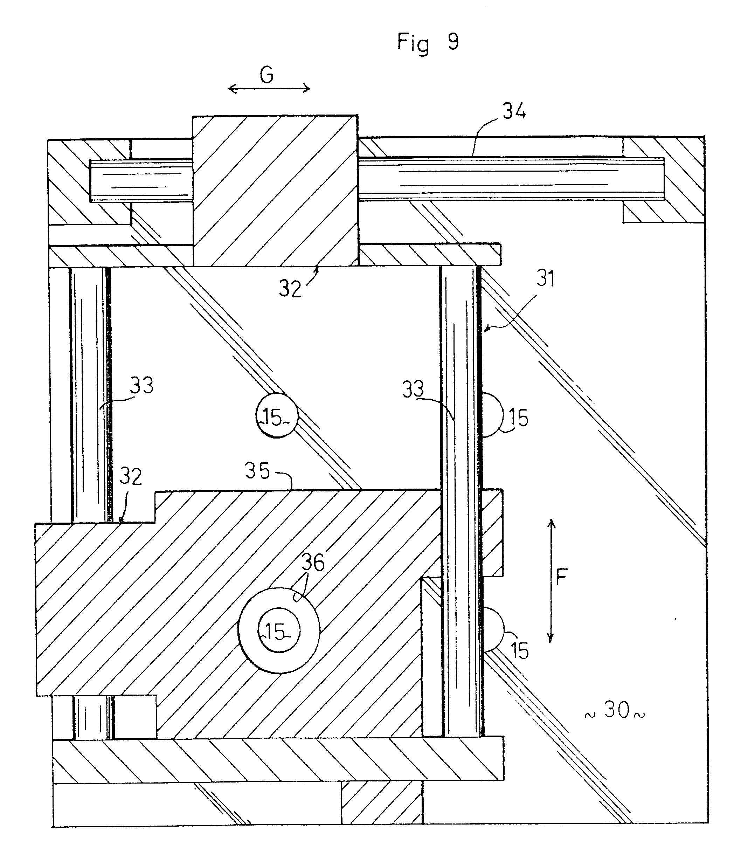

Comme cela est nettement visible à la figure 9, le moyen de sélection 31 comporte deux coulisseaux 32 pouvant glisser le long de deux guides 33 et 34 orthogonaux l'un par rapport à l'autre.

Ainsi, le corps 35 du moyen de sélection, muni d'un orifice 36 adapté pour recevoir le moyen élastique 11 (non représenté) est adapté pour venir en coïncidence (par déplacement selon les flèches F et G) avec l'un des orifices de sortie 15, des dispositifs de stockage.

En variante, et tel que représenté selon le détail D de la figure 4, l'emboîtement du dispositif de stockage 20 dans le moyen élastique 11 est facilité par la réalisation de créneaux 40, ménagés à l'extrémité de chacun de ces éléments. Ces créneaux constituent un moyen de connexion rapide entre les divers éléments à raccorder et permettent avantageusement d'assurer le centrage des différents alésages internes, de manière à créer un conduit continu sans discontinuités de surfaces pour les pièces 14.

Bien entendu, la présente invention n'est pas limitée aux modes de réalisation ci-dessus décrits et englobe toute variante à la portée de l'homme de l'art. Notamment de tels dispositifs de distribution ou de stockage de pièces peuvent être mis en oeuvre pour des pièces autres que des rivets, par exemple des vis, clous, agrafes, ..., etc.

## Revendications

1. Dispositif de stockage de pièces en vue de leur distribution à l'unité, caractérisé en ce qu'il comporte :
- un élément tubulaire (22), un raccord (22a) et un élément de retenue (22b) présentant chacun un alésage interne (23) adapté pour loger et guider une pluralité de pièces (14₁, ..., 14ₙ) placées les unes derrière les autres,
- une source de pression, adaptée pour exercer une pression à l'intérieur de l'alésage central (23), sur une première pièce (14₁) de ladite pluralité et,
- des moyens de retenue (24) ménagés dans l'élément de retenue (22b), adaptés dans un premier temps pour retenir la première pièce (14₁) et la suivante (14₂), dans un second temps pour libérer la première pièce (14₁) sur commande et dans un troisième temps pour mettre en attente la pièce suivante (14₂) en la faisant passer en première position, et ainsi, délivrer, à l'unité, chaque pièce de la pluralité.

2. Dispositif de stockage selon la revendication 11, caractérisé en ce que les moyens de retenue (24) sont constitués par un premier et un second vérins (25, 26) adaptés pour faire saillie à l'intérieur de l'alésage central (23), au niveau respectivement de la première pièce (14₁) et de la suivante (14₂).

3. Dispositif selon la revendication 1, caractérisé en ce que les moyens de retenue (24) comportent un moyen de commande des premier et second vérins.

4. Dispositif selon la revendication 3, caractérisé en ce que le moyen de commande est une vanne 5/2.

5. Dispositif selon l'une des revendications 2, 3 ou 4, caractérisé en ce que les premier et second vérins (25, 26) sont disposés orthogonalement l'un par rapport à l'autre.
